(19) **Europäisches Patentamt / European Patent Office / Office européen des brevets**

(11) **EP 2 015 156 B1**

(12) **FASCICULE DE BREVET EUROPEEN**

(45) Date de publication et mention de la délivrance du brevet:
**31.10.2012 Bulletin 2012/44**

(51) Int Cl.:
***G05B 15/02*** *(2006.01)*

(21) Numéro de dépôt: **08159836.9**

(22) Date de dépôt: **07.07.2008**

(54) **Procédé de fonctionnement d'une installation domotique et installation domotique pour sa mise en oeuvre**

Verfahren zum Betrieb einer Heiminstallation und Heiminstallation zur Durchführung dieses Verfahrens

Operating procedure for a home automation installation and home automation installation for its implementation

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **09.07.2007 FR 0704959**

(43) Date de publication de la demande:
**14.01.2009 Bulletin 2009/03**

(73) Titulaire: **Somfy SAS**
**74300 Cluses (FR)**

(72) Inventeurs:
- **Bourgeois, Valérie**
  **74330, EPAGNY (FR)**

- **Decroix, Christophe**
  **F - 74800, LA ROCHE SUR FORON (FR)**
- **Scrivo, David**
  **74800, LA ROCHE SUR FORON (FR)**
- **Pillon, Laurent**
  **74130, BONNEVILLE (FR)**

(74) Mandataire: **Bugnion Genève**
**Bugnion S.A.**
**Conseils en Propriété Industrielle**
**Route de Florissant 10**
**Case Postale 375**
**1211 Genève 12 (CH)**

(56) Documents cités:
**EP-A- 1 122 404      EP-A- 1 510 649**
**WO-A-97/12109**

**Description**

L'invention concerne le domaine des motorisations d'éléments mobiles de fermeture, d'occultation, de protection solaire ou d'écran dans un bâtiment, l'élément mobile se déplaçant entre une première position de fin de course et une deuxième position de fin de course, ces déplacements étant provoqués par des mouvements de rotation du moteur.

Il est courant de disposer des volets roulants ou des stores au niveau des ouvertures des habitations, ayant des fonctions de protection solaire, d'assombrissement ou de sécurité contre les intrusions. Ces éléments mobiles sont pilotés automatiquement grâce à des actionneurs alimentés par le réseau ou autonomes.

L'installation et le contrôle du mouvement de ces éléments mobiles sont assez complexes et requièrent les services d'une personne qualifiée.

Les procédures d'installation visent généralement à définir et éventuellement à mémoriser les première et deuxième positions de fin de course au niveau desquelles l'élément mobile doit, en fonctionnement, automatiquement arrêter sa course, ainsi que diverses positions ou paramètres de fonctionnement.

De telles procédures d'installation sont largement décrites dans l'art antérieur. Il existe en général un mode dit mode d'apprentissage au cours duquel l'élément mobile est déplacé jusqu'à ces positions de fin de course ou positions extrêmes, qui sont alors enregistrées, soit manuellement soit automatiquement.

Plus récemment, divers brevets et demandes de brevet décrivent des procédés d'installation dans lequel l'installateur n'intervient pas ou très peu.

Ainsi la demande FR 2 849 553 décrit un actionneur pour porte de garage dépourvu de mode d'apprentissage. Dans les faits, l'actionneur va déterminer de lui-même les positions de fin de course, matérialisées par des butées franches, et recaler les valeurs d'effort à l'arrivée sur ces butées pour à la fois éviter les contraintes trop fortes lors de l'arrivée sur la butée et pour s'adapter aux changements du produit porteur (vieillissement, conditions climatiques changeantes, etc.) Ainsi, des mises à jour régulières et des recalages des valeurs de force (en fonction de la force mesurée ou d'autres paramètres) sont effectués en particulier dans le cas d'une détection d'une force excessive.

Dans le même domaine, le brevet US 5,729,101 décrit également une installation dans laquelle aucun réglage des positions de fin de course par l'installateur n'est nécessaire. Cette installation dispose d'un compteur de position et d'un détecteur de force. Ce brevet décrit une méthode d'accostage et de recalibrage automatique de l'accostage. Si lors d'un déplacement, la porte n'atteint pas la position désignée par le compteur comme la position de fin de course, l'installation en déduit qu'une dérive dans le système de comptage a pu se produire et recale le niveau du compteur de position : l'actionneur poursuit son mouvement pendant un certain temps (ou pendant un certain nombre de pas) jusqu'à atteindre celle-ci et inversement, le temps d'activation est réduit si la porte atteint la valeur de compteur avant son arrêt prévu. Ce recalage est relativement aisé dans la mesure où une valeur de position représente de manière absolue une position réelle en référence à une des butées. Cependant, il est essentiellement lié à des valeurs de compteur déterminées lors du premier cycle d'ouverture fermeture.

Des procédures de recalage régulières (tous les 100 cycles) sont prévues, de façon à écarter tout risque de dérive dans le cas d'une erreur de comptage (due par exemple à un pic de tension). Dans ce cas, le compteur est remis à jour au niveau d'une butée. Ce recalage régulier n'est en aucun cas lié à une inadéquation de l'auto-ajustement vis à vis des changements de fonctionnement rencontrés.

Le procédé d'ajustement automatique décrit dans ce brevet est applicable uniquement à une installation disposant d'un système de comptage précis et sûr.

Si on souhaite s'affranchir d'un compteur de position, il existe différentes méthodes pour repérer une position et notamment par repérage temporel. Une telle méthode est décrite par exemple dans les demandes de brevet EP 1 122 404 et EP 0 574 637. En fonction des temps de parcours déterminés à la montée et à la descente, une position relative est définie par un temps de parcours depuis une position connue, par exemple une position de référence.

En particulier, la demande EP 1 122 404 évoque la possibilité de minimiser les temps de montée et de descente d'une valeur fixe prédéterminée (300 ms) de manière à ce qu'en principe, le volet n'arrive jamais totalement en butée et en état de compression. Lorsqu'un blocage est détecté au niveau d'une butée haute ou basse, le système de comptage se recale en affectant la valeur maximale au compteur. Si l'arrêt est dû à un obstacle, à la prochaine mise en service, quand le volet s'arrêtera en butée haute ou basse, le système se recalera. Il ne remet pas en cause les données d'installation déterminées lors d'une phase de configuration.

Dans les deux cas, l'installateur met en oeuvre préalablement au fonctionnement en mode dit d'usage, une procédure d'installation dans laquelle il déplace l'élément mobile d'une position quelconque vers une première position de butée, puis vers une deuxième en mesurant un premier temps de parcours et enfin, il déplace l'élément mobile vers la première position de butée en mesurant un deuxième temps de parcours. Une fois ainsi configurée, l'installation est opérationnelle. Ces déplacements peuvent également avoir lieu de manière automatique à l'entrée dans un mode d'installation. Les temps de parcours ainsi mesurés font cependant office de référence pour toute la durée de vie du produit.

Le but de l'invention est de fournir une alternative aux procédés décrits, qui permette de configurer très simplement une installation d'écran motorisée, de manière automatique et qui permette également de s'adapter aux diverses situations de fonctionnement changeantes. De plus, l'invention permet de remettre à jour des paramètres a priori fixés lors de l'installation, sans intervention de l'installateur. L'invention permet donc d'obtenir un véritable actionneur "Plug and Play", capable de s'auto-configurer quelle que soit sa configuration d'origine, quelles que soient les conditions de fonctionnement pour lesquelles il est installé ou réinstallé, et même dans le cas où ces conditions sont modifiées radicalement.

Le procédé de fonctionnement selon l'invention est défini par la revendication 1.

Différents modes d'exécution sont définis par les revendications dépendantes 2 à 12.

L'installation selon l'invention est définie par la revendication 13.

Différents modes de réalisation de l'installation sont définis par les revendications dépendantes 14 et 15.

Le dessin annexé représente, à titre d'exemple, un mode de réalisation d'une installation selon l'invention et le principe d'un mode d'exécution du procédé de fonctionnement selon l'invention.

La figure 1 est un schéma représentant le principe de détermination de la position d'un élément mobile par un paramètre temporel de déplacement depuis l'une de ses positions de fin de course.

La figure 2 est un ordinogramme décrivant le principe de calcul d'une information de durée de déplacement de l'élément mobile entre ses deux positions de fin de course selon un mode d'exécution du procédé selon l'invention.

La figure 3 est un schéma représentant les effets dans le temps, sur l'information de durée de déplacement de l'écran entre ses positions de fin de course, de l'existence d'un nouveau point d'arrêt de l'élément, ce nouveau point d'arrêt étant permanent ou temporaire.

La figure 4 est un schéma d'une installation selon l'invention.

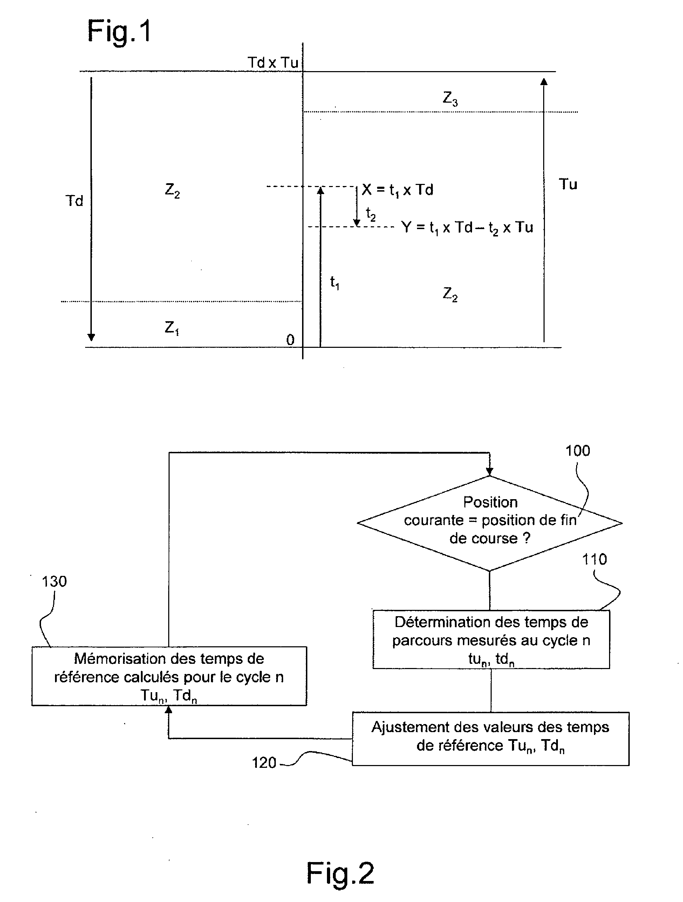

La figure 1 présente de manière schématique une installation domotique 1 comprenant un actionneur 2 électromécanique permettant de piloter en mouvement un élément mobile 3 de fermeture, d'occultation, de protection solaire ou d'écran. Cet élément peut consister par exemple en un store, un volet roulant, une fenêtre ou une porte.

L'élément mobile est destiné à être manoeuvré entre deux positions de fin de course matérialisées par des butées. Cet élément mobile est entraîné en mouvement par l'intermédiaire de l'actionneur électromécanique comprenant d'une part un ensemble moteur 4 et une unité électronique 5 de commande du mouvement.

L'unité électronique de commande comprend des moyens 6 de communication pour recevoir des ordres de commande de mouvement. L'unité électronique comprend en outre une unité logique de traitement 7 comprenant des moyens 8 de calcul de moyenne et des moyens logiciels pour régir le fonctionnement de l'actionneur et notamment régir son fonctionnement selon le procédé qui est décrit plus bas. Les moyens logiciels peuvent notamment comprendre des programmes informatiques. Les moyens de mise en oeuvre du procédé comprennent des moyens de mesure de temps, en particulier des moyens de mesure du temps d'activation de l'actionneur.

L'unité électronique comprend un compteur temporel 9 mesurant des temps de parcours de l'élément mobile et des moyens électroniques pour définir la position courante de l'élément mobile à partir de la dernière position et du dernier temps de parcours. Des mémoires 10 sont prévues pour l'enregistrement des valeurs mesurées et calculées par l'unité électronique. L'unité électronique comprend également un capteur 11 capable de détecter l'arrivée de l'élément mobile dans les positions de fin de course (sur une butée) ou sur un obstacle. Ce capteur peut être un détecteur de couple ou de variation de couple, un capteur de détection de sous-vitesse ou tout autre capteur connu dans l'état de l'art.

Pour des écrans lourds mais non rigides, par exemple des volets roulants ou stores à barre de charge lestée, la détection d'obstacle pourra être mise en oeuvre soit par une détection d'allègement de charge (les lames de volets s'empilent par exemple ou la barre de charge arrive en contact sur l'obstacle), soit par détection d'une contrainte à l'enroulement. Ce sera le cas notamment des volets roulants : lorsque la lame finale est bloquée sur un obstacle à la descente, le moteur continue à tourner et à dérouler l'écran dans le caisson de volet. Au bout d'un certain temps, le volet se coince dans le caisson et bloque l'axe d'enroulement, ce qui peut être détecté par l'unité électronique. On parle alors plutôt de protection de l'écran plutôt que de détection d'obstacle, mais dans la description qui va suivre, tous ces cas seront compris dans la détection d'obstacle.

Il est à noter que lors du déroulement du volet dans le caisson et tant que le moteur continue de tourner, la détection temporelle de position est active. La position de l'obstacle en temporel ne correspondra donc pas à la position physique de l'obstacle sur la course de l'écran, en particulier à la descente.

A la montée, un obstacle du type gel ou neige retenant la lame finale d'un volet sera détecté par reconnaissance d'une contrainte à l'enroulement. La position de l'obstacle sera repérée de manière relativement précise par le compteur temporel.

Avantageusement, le capteur de l'unité électronique est capable de fonctionner avec plusieurs sensibilités différentes.

Dans le cas d'un système tout automatique où seule une détection de butée est active (sans détection de position), il n'est pas possible de gérer des zones dites d'accostage dans lesquels une arrivée en butée est réalisée de manière plus douce, soit par une sensibilité de détection accrue ou une vitesse d'accostage plus faible (la butée est alors détectée très tôt et la contrainte sur l'écran est moindre) ou une force appliquée plus faible. Dans ce cas, la puissance de l'actionneur est réduite.

La gestion des positions par mesures temporelles permet de s'affranchir d'un capteur de position physique tout en gérant des positions et des zones de manoeuvre, en particulier des zones d'accostage. En fonctionnement normal, l'unité électronique pilote le moteur jusqu'à ce qu'elle détecte une butée ou un obstacle, mais elle tient également compte des temps de manoeuvre.

Comme dans l'art antérieur, on définit un temps de référence correspondant à la durée de parcours depuis l'une des positions de fin de course vers l'autre position de fin de course. Avantageusement, un temps de référence en montée Tu et un temps de référence en descente Td sont définis. Le temps de référence est utilisé en particulier pour la détermination d'une arrivée dans une zone d'accostage. L'invention permet une mise à jour permanente, ou au moins très fréquente, des temps de référence.

La figure 1 montre les zones distinctes dans lesquelles la sensibilité du capteur de détection d'obstacle et de butée est optimisée. Les zones proches des positions de fin de course Z1 et Z3 sont dites zones d'accostage. La zone Z2 est la zone de fonctionnement normal. Dans les zones d'accostage, la sensibilité du capteur (valeur seuil, temps de réaction et/ou autre paramètre) est accrue, ce qui provoque un arrêt plus rapidement mis en oeuvre sur les butées des positions de fin de course. Alternativement, la puissance de l'actionneur est réduite dans la zone d'accostage.

Ces zones d'accostage sont définies par un temps de parcours fixe (par exemple 1 seconde de déplacement de l'élément mobile avant l'arrivée dans l'une des positions de fin de course).

Lors d'une arrivée dans une position dans laquelle le capteur détecte une butée, l'unité électronique gère cette information du capteur de la manière suivante :

Dans la zone d'accostage, un obstacle ou une butée détectée est considéré comme une fin de course. L'unité électronique va alors déterminer un nouveau temps de référence, basé sur un temps de parcours entre la première position de fin de course et cette nouvelle position. Le nouveau temps de référence est défini en utilisant un traitement numérique pondéré comme prévu dans l'invention.

Une position de fin de course matérialisée par un obstacle ou une butée détectée avant l'arrivée dans la zone d'accostage est considérée comme la position d'un obstacle. On choisit que l'unité électronique réajuste le temps de référence vers cet obstacle, mais ne réajuste pas le temps de référence suivant à partir de cet obstacle, même si le parcours se termine dans la zone d'accostage. Lors du parcours suivant vers l'obstacle, même si celui-ci est permanent (s'il s'agit d'une butée), la valeur du temps de référence enregistré tend à s'ajuster d'elle-même à ce nouveau seuil.

Si l'obstacle est temporaire, la valeur du temps de référence réajustée précédemment reviendra rapidement à son niveau précédant la détection d'obstacle.

La différentiation entre butée et obstacle permet de gérer différemment les calculs de moyennes comme expliqué plus loin.

Lorsqu'un obstacle est placé sur le parcours du volet en descente, par exemple une chaise ou un pot de fleur, alors que le volet continue d'être actionné, par exemple par un automatisme piloté par horloge, une mise à jour trop rapide des temps de référence n'est pas nécessairement souhaitée, vu qu'il ne s'agit pas d'un obstacle permanent. Le temps de référence en montée, partant d'un obstacle, n'est pas modifié. Seul le temps de référence en descente est réajusté dans un tel cas, la fin de course haute pouvant dans ce cas toujours être dans la zone d'accostage. Si cette situation se poursuit, la zone d'accostage basse finit par englober l'obstacle. Les temps de référence en montée et en descente peuvent alors être tous les deux réajustés conformément à l'invention.

La figure 1 schématise un cadre de déplacement de l'élément mobile entre une position de fin de course basse FDCB correspondant à un compteur de position mis à 0 et une position de fin de course haute FDCH correspondant à une valeur de position à Td x Tu, Td et Tu étant les valeurs de temps de référence entre deux positions de fin de course, respectivement en descente et en montée, calculés selon l'invention. Le fait d'utiliser dans un même compteur un produit de temps comme indicateur de position simplifie grandement la gestion par un microcontrôleur, dans lequel les divisions sont délicates.

Les positions de l'écran entre les positions de fin de course peuvent aussi être repérées simplement comme explicité dans la demande EP 1 122 404 citée précédemment. Alternativement, d'autres méthodes plus précises telles que celle décrite par exemple dans la demande de brevet EP 1 508 844 pourraient être utilisées.

On suppose que, depuis la position basse, l'écran est manoeuvré jusqu'à une position X. Cette position est repérée par l'unité de commande par le temps de parcours réalisé $t_1$ depuis la position de fin de course inférieure multiplié par le temps de référence en montée Tu.

Depuis la position X, une nouvelle position Y est atteinte par un déplacement vers le bas d'une durée $t_2$, celle-ci est repérée par l'équation suivante

$$Y = X - t_2 \times Tu \text{ , soit } Y = t_1 \times Td - t_2 \times Tu \text{ ,}$$

dans laquelle Td est le temps de référence en descente. Une division par le produit Tu x Td donnerait les positions correspondantes X' ou Y' sur une échelle de déplacement unitaire, mais il est préférable d'utiliser une échelle de type produit.

Le procédé de fonctionnement de l'actionneur 2 comprend plusieurs phases comprenant notamment une phase d'initialisation, une phase de fonctionnement et une phase de remise à zéro.

La phase d'initialisation est mise en oeuvre automatiquement lorsqu'un actionneur dit "vierge" est installé et démarré pour la première fois. Les mémoires sont alors vierges et l'actionneur permet à l'écran de se déplacer entre les positions de fin de course avec certaines précautions par défaut et tout en mesurant un certain nombre de paramètres pouvant être utiles pour la configuration de celui-ci. Cette phase est transparente pour l'utilisateur, c'est-à-dire que celui-ci commande les mouvements de déplacement de l'écran sans savoir quelle phase du procédé est mise en oeuvre.

Pour l'initialisation des données de fonctionnement, les x premiers cycles peuvent être utilisés pour déterminer entre autres les temps de référence. L'unité électronique mesure alors, durant les x premiers cycles les temps de parcours maximum entre les positions de fin de course. Ces temps de parcours maximum deviennent alors les temps de référence. Les zones d'accostage sont également déterminées au cours ou suite à cette phase.

Suite à ces x premiers cycles, une procédure de détermination du sens de rotation peut être mise en oeuvre. En effet, selon le sens de montage de l'actionneur, la montée ou la descente peut correspondre à un premier ou un deuxième sens de rotation. Cette procédure peut être telle que décrite dans le brevet EP 0 833 435.

Ainsi, le comportement de l'actionneur, notamment pour la détection de butée ou d'obstacle peut être défini de manière asymétrique en fonction du sens montée ou du sens descente déterminé, par exemple une première sensibilité de détection est assignée à la montée et une deuxième sensibilité de détection est assignée à la descente.

Un certain nombre x' de cycles est dédié à cette procédure de détermination, au cours desquels le comportement de l'actionneur est symétrique pour les deux sens de rotation.

Les x' cycles de détermination du sens de rotation peuvent être confondus, au moins en partie, avec les x cycles pour la détermination des temps de référence.

Si le sens de rotation ne peut être déterminé par la procédure de détermination décrite ci-dessus, soit parce que par exemple la différence entre le temps de montée et le temps de descente du volet n'est pas significative, l'actionneur conserve son comportement symétrique.

Suite au mode d'initialisation, un mode de fonctionnement dit d'ajustement continu, ou automatique ou d'auto-ajustement, est mis en oeuvre lors des cycles suivants. Cet auto-ajustement est basé sur un réajustement des temps de référence, mis en oeuvre dès qu'une détection de position de fin de course ou éventuellement d'obstacle intervient.

La figure 2 montre sous forme d'ordinogramme, les calculs des nouveaux temps de parcours servant de référence.

Dans une première étape 100, on teste si l'on est parti d'une position de fin de course permettant d'effectuer un nouveau calcul de moyenne de durée de déplacement extrême de l'élément mobile. Si tel n'est pas le cas on boucle sur ce test. Par contre, si tel est le cas, on passe à une étape 110, dans laquelle on détermine la nouvelle valeur mesurée de temps de déplacement, notée $td_n$ vers le bas ou $tu_n$ vers le haut.

Dans une étape 120, on utilise cette nouvelle valeur de temps de déplacement comme suit pour calculer la nouvelle valeur du temps de référence en montée $Tu_n$ ou du temps de référence en descente $Td_n$.

Dans un premier mode de réalisation, les temps de référence sont définis par une moyenne glissante fictive ou moyenne pondérée sur les k derniers cycles en affectant la moyenne $Tu_{n-1}$ ou $Td_{n-1}$ établie précédemment à l'ensemble des k-1 valeurs précédentes :

$$Tu_n = ((k-1)\ Tu_{n-1} + tu_n\ )\ /\ k$$

$$Td_n = ((k-1)\ Td_{n-1} + td_n\ )\ /\ k$$

Ce traitement numérique est strictement équivalent à appliquer un filtrage numérique d'ordre 1 aux valeurs mesurées pour en déduire le nouveau temps de référence. En posant $\alpha = 1/k$, on obtient les relations équivalentes :

$$Tu_n = ((1-\alpha)Tu_{n-1} + \alpha\ tu_n\ )$$

$$Td_n = ((1-\alpha)Td_{n-1} + \alpha\ td_n\ )$$

Un temps de référence est ainsi remis à jour automatiquement après chaque cycle.

Il est possible de faire varier k en fonction du type de détection : pour corriger une simple dérive par rapport aux positions de fin de course précédemment déterminées, c'est-à-dire par exemple si les différences entre les temps calculés et mesurés sont petites ou lors de la détection de la position de fin de course dans une zone d'accostage, la moyenne pondérée peut être réalisée sur environ 5 cycles. Un tel filtrage (équivalent à $\alpha$ = 0,2) permet de converger assez rapidement vers une commande de position conforme à la réalité physique et donc d'ajouter à la performance de cette commande.

En revanche, si l'unité électronique détecte un obstacle sur le parcours en dehors d'une zone d'accostage, la moyenne pondérée peut être associée à un coefficient égal à 10 ou plus ($\alpha$ = 0,1). La convergence est alors plus lente mais la prise en compte de l'obstacle est également minimisée.

L'intérêt de ce filtrage est évidemment de prendre en compte mais de manière souple les différents événements rencontrés lors de la manoeuvre de l'élément mobile, sans apporter des réponses trop instantanées à ces évènements.

En effet, lors d'une détection d'obstacle, il est possible que cet obstacle ne soit rencontré qu'une fois, celui-ci ayant disparu avant le cycle de manoeuvre suivant, ou au contraire, que l'obstacle soit dit permanent (ce sera le cas par exemple si une nouvelle chape au sol est réalisée après l'installation de cet écran ou si un installateur réinstalle l'actionneur avec un nouvel écran pour une autre fenêtre par exemple).

Dans la plupart des systèmes connus, il serait dans ce dernier cas nécessaire de prévoir une réinitialisation des positions de fonctionnement, avec par exemple un nouvel apprentissage des positions de fin de course. Au contraire, en utilisant un auto-ajustement de l'actionneur tout au long de la vie de l'installation, celui-ci se réajuste progressivement et prend en compte autant les modifications brutales que les changements uniquement perceptibles au cours du temps.

L'initialisation de l'algorithme consiste préférentiellement en une affectation de la première valeur de temps de référence déterminée lors du mode d'initialisation en tant que moyenne des temps de référence des cycles précédents.

Dans un second mode de réalisation, plutôt qu'une moyenne pondérée, l'unité électronique détermine une moyenne glissante réelle sur un nombre k' prédéterminé de cycles de fonctionnement. La pondération est égale à 1 pour les k' dernières valeurs et égale à 0 pour les cycles antérieurs.

Les k'-1 valeurs précédentes de temps de référence sont mémorisées et le temps de référence au cycle n est obtenu selon les formules suivantes :

$$Tu_n = (k'\ Tu_{n-1} + tu_n - tu_{n-k'})\ /\ k'$$

$$Td_n = (k'\ Td_{n-1} + td_n - td_{n-k'})\ /\ k'$$

La moyenne glissante réelle ne prend alors en compte que les k' derniers cycles. Celle-ci est effectivement complètement active au bout des k' cycles de fonctionnement, même si les équations précédentes peuvent être utilisées pour les réajustements sur les k' premiers cycles. Seuls ceux-ci sont alors intégrés dans le calcul. L'initialisation de l'algorithme consiste en une affectation de la première valeur mesurée à toutes les valeurs mémorisées.

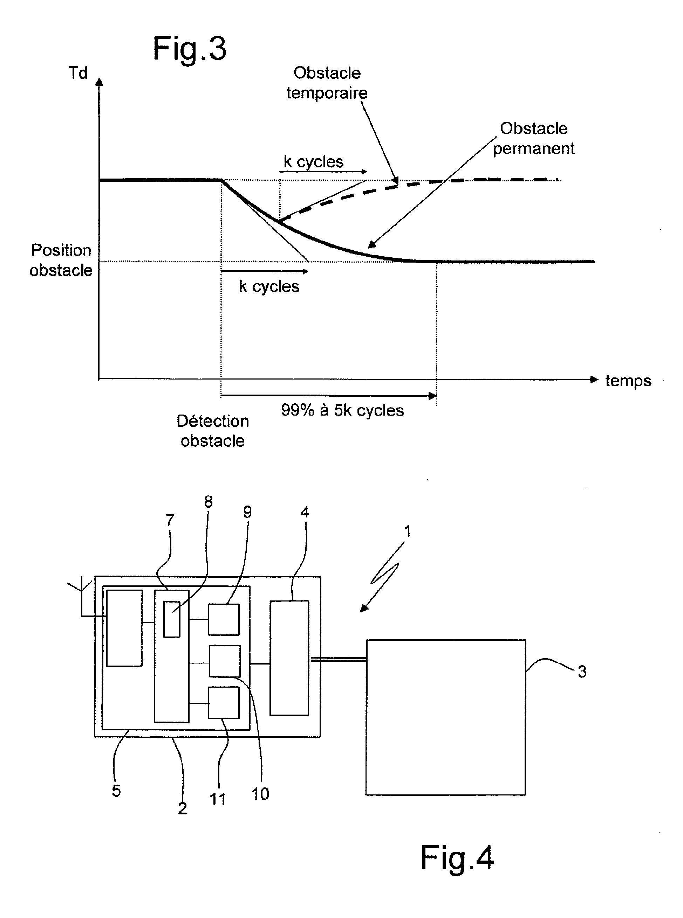

La figure 3 illustre sous forme de graphique le réajustement au cours du temps par des moyennes pondérées, de la valeur du temps de référence en descente lors de l'occurrence d'un obstacle permanent sur un cycle (courbe en trait gras) et lors de l'occurrence d'un obstacle temporaire (courbe en pointillés). Dans le cas d'un obstacle permanent, le temps de référence se réajuste (c'est-à-dire que 95% de l'écart entre les deux droites horizontales parallèles est atteint) au bout de 3.k cycles pour une moyenne pondérée.

En effet, avec un filtrage numérique de premier ordre caractérisé par $\alpha$, la tangente à l'origine (point de rupture de pente de la courbe) coupe la valeur finale au bout de $1/\alpha$ = k cycles ou échantillons. C'est la constante de temps. On dépasse 95% de l'écart entre les valeurs initiale et finale au bout de 3 constantes de temps, et 99% de l'écart entre les valeurs initiale et finale au bout de 5 constantes de temps.

Un avantage est de conserver une zone d'accostage "décalée" en lien avec le temps de référence, lorsque la zone d'accostage est définie de par formule comprenant la soustraction d'un paramètre fixe au temps de référence.

Alternativement, il est possible de définir pour les zones d'accostage un temps fixe ou relatif au dernier temps de référence en mémoire et dépendant de la différence entre les derniers temps de parcours mesurés, si celle-ci est positive. Ainsi, lors de la mesure d'un temps de parcours extrême très différent de la mesure du temps de parcours extrême au cycle précédent, la zone d'accostage est elle-même réajustée fortement de sorte que la zone d'obstacle soit comprise dans une zone d'accostage. Ce réajustement de la zone d'accostage peut n'être prévu que dans un sens de rotation, par exemple pour la descente, afin d'éviter, compte tenu de la sensibilité plus élevée de détection de ne pouvoir passer des pics de couple lorsque l'actionneur doit soulever l'élément mobile en montée.

En effet, dans le cas d'un obstacle temporaire détecté au cycle n, par exemple un balai bloquant le déroulement du tablier d'un volet roulant, l'arrivée sur l'obstacle sera réalisée avec une sensibilité plus faible (car le balai se situe hors zone d'accostage). Le temps de référence est réajusté de la valeur $Td_{n-1}$ à la valeur $Td_n$ en conséquence, conformément à l'invention par le principe de moyennes. La durée spécifique Z1 définissant la zone d'accostage $Z_1$ est alors calculée à partir de l'équation suivante :

$$Z1_{n+1} = Td_n \times \beta/100 + (Td_{n\ mesuré} - Td_{n-1\ mesuré}) \qquad si\ (Td_{n\ mesuré} - Td_{n-1\ mesuré}) \geq 0$$

$$Z1_{n+1} = Td_n \times \beta/100 \qquad\qquad si\ (Td_{n\ mesuré} - Td_{n-1\ mesuré}) < 0$$

On peut choisir par exemple $\beta = 5$.

L'arrivée sur la zone d'obstacle sera alors placée dans une zone de sensibilité accrue.

Si l'obstacle a été enlevé, au prochain parcours, la différence entre le temps de parcours extrême venant d'être mesuré et le temps de parcours extrême du cycle précédent étant négative, la zone d'accostage sera redéfinie à sa valeur première.

Si en revanche, il s'agit d'un obstacle de type permanent, la zone d'accostage dans le cycle suivant conserve la valeur relative au dernier temps de parcours extrême mesuré.

Comme dit précédemment, la valeur nominale de la zone d'accostage peut être une valeur fixe, y compris dans ce mode de réalisation. En revanche, si elle est relative au temps de référence défini par l'unité électronique, sa valeur s'ajuste également de manière douce en suivant l'ajustement du temps de référence.

Pour sécuriser de plus le fonctionnement de l'actionneur, on met en place un temps de parcours ultime ou de sécurité. Celui-ci prend une valeur initiale fixe, puis s'auto-ajuste conformément aux temps de référence en ajoutant une valeur fixe, par exemple 20 secondes, aux derniers temps de référence calculés.

En dehors du fonctionnement classique dans lequel l'actionneur est soumis à de légères dérives, celles-ci étant prises en compte par l'auto-ajustement, certains cas particuliers d'utilisation peuvent survenir provoquant des changements plus importants. Ces changements, en dehors de l'invention, doivent généralement nécessiter une intervention d'installateur, par exemple par une procédure de remise à zéro des paramètres de fonctionnement appris.

Cette remise à zéro par l'installateur nécessite de prévoir une interface de saisie spécifique ou une ergonomie particulière pour dialoguer avec l'unité électronique de l'actionneur et indiquer la volonté de l'installateur de remettre l'actionneur dans un état vierge.

Ces cas d'utilisation sont par exemple des cas de réutilisation d'un actionneur pour un produit différent (par exemple d'un volet roulant à un store), dans un cadre différent (fenêtre à couvrir de taille différente), ou simple montage de l'actionneur dans un sens différent.

Une situation de détection répétée et consécutive d'obstacles en dehors des zones d'accostage dans les deux sens de rotation peut par exemple être observée. Cette situation correspond par exemple au repositionnement d'un actionneur vers un volet pour fenêtre de petite taille, c'est-à-dire tel que les temps de parcours extrêmes sont inférieurs aux temps de parcours de référence diminués des temps alloués pour les zones d'accostage. Il s'agit d'une situation dans laquelle les conditions d'utilisation de l'actionneur ont radicalement changé mais dans laquelle l'utilisation reste possible. Il n'y a alors en théorie plus d'auto-ajustement puisque les calculs décrits sont mis en oeuvre uniquement au cours d'un cycle où une position de fin de course est atteinte (une butée ou un obstacle atteint dans la zone d'accostage).

Pour pallier les problèmes associés à une telle situation perturbant le bon fonctionnement du produit, il est prévu une procédure de recalage en complément de l'algorithme d'auto-ajustement des temps de référence. Cette procédure de recalage permet de placer l'actionneur dans un mode vierge équivalent à un actionneur à sa sortie de fabrication et de reprendre à zéro les calculs des temps de référence en ne tenant plus compte des valeurs précédentes. Selon un aspect de l'invention, elle est mise en oeuvre automatiquement suite à une détection répétée d'obstacles ne conduisant pas à un auto-ajustement.

Une autre situation est celle du remontage de l'actionneur dans un sens différent. Il s'avère alors que les temps correspondant à la montée et à la descente ne correspondent plus du tout aux valeurs d'origine, même si l'actionneur a été monté avec un nouvel écran de dimensions similaires à l'ancien. Ceux-ci sont inversés. En particulier, si la détermination des sens liés à la montée et à la descente a des conséquences sur le fonctionnement de l'actionneur, par exemple sur les sensibilités de détection d'obstacle, l'actionneur à fonctionnement asymétrique fonctionne alors à l'envers. Or, la procédure d'auto-ajustement permet de compenser les variations des temps de parcours, d'un temps de montée à un temps de descente et inversement, mais ne remet pas en question le sens de rotation.

Il est alors nécessaire, lorsque cette inversion se confirme, de réinitialiser les temps de référence et le sens de rotation de référence. La procédure de recalage conforme à l'invention permet de placer de manière automatique l'actionneur dans un mode vierge équivalent à un actionneur à sa sortie de fabrication et de reprendre à zéro les déterminations des sens de rotation en ne tenant plus compte des valeurs précédentes. Elle est mise en oeuvre également si au bout d'un certain nombre de cycles avec auto-ajustement, la différence entre les temps de référence en montée et en descente devient non significative alors qu'elle l'était auparavant. Alternativement, seule la partie détermination du sens de rotation est réitérée, les temps de référence s'ajustant au cours des phases de fonctionnement en auto-ajustement.

Les différentes situations présentées ci-dessus font apparaître clairement que l'auto-ajustement ne peut compenser toutes les variations et en particulier, ne permet pas de remettre en cause certaines données de fonctionnement initialisées au cours d'une phase d'initialisation. On comprend alors que dans de telles situations, l'auto-ajustement n'est plus adapté et nécessite d'être recalé sur une nouvelle valeur. Si ceci n'est pas pris en compte, l'actionneur ne peut fonctionner comme un actionneur "Plug and Play", puisqu'il n'est pas capable de s'ajuster à toutes les situations sans intervention de l'installateur.

Le procédé de fonctionnement passe d'un mode d'ajustement automatique à un mode de recalage par suite notamment de l'occurrence des évènements suivants :

a. Présence d'obstacles ne donnant pas lieu à réajustement, pendant un nombre prédéterminé de cycles dans la phase de fonctionnement.
Cela peut être le résultat d'un repositionnement d'un actionneur sur une fenêtre plus petite que l'ancienne fenêtre diminuée de la hauteur des zones d'accostage. L'unité électronique constate alors, lors des déplacements, une succession d'obstacles quel que soit le sens de rotation, sans qu'il y ait d'auto-ajustement, celui-ci n'ayant lieu que lors de l'arrivée dans une position de fin de course située en zone d'accostage. Suite à un nombre a' de telles occurrences, l'unité électronique décide de remettre à jour ses paramètres de fonctionnement et réitère la phase d'initialisation.

b. divergence des données de fonctionnement relatives à des durées de déplacement de l'élément mobile d'une position de fin de course à une autre pendant un nombre prédéterminé de cycles dans la phase de fonctionnement.
Ce peut être le résultat d'un repositionnement d'un actionneur sur une fenêtre de même dimension ou sur la même fenêtre mais dans un sens différent de celui d'origine. L'unité électronique constate alors que chaque temps de référence a tendance à se recaler vers la valeur de l'autre temps de parcours. Cette inversion n'est cependant pas prise en compte pour le fonctionnement asymétrique de l'actionneur.
Alternativement, lors du repositionnement d'un actionneur d'une fenêtre de petite taille sur une fenêtre de plus grande dimension, pour laquelle il devient possible de différencier un temps de montée d'un temps de descente ou autrement dit, d'identifier un sens de déplacement de l'élément mobile, il est intéressant de réinitialiser le fonctionnement pour prendre ces données en compte. L'unité électronique décide alors de recaler ses paramètres de fonctionnement et réitère la phase d'initialisation.

c. convergence des durées de déplacement d'une position de fin de course à l'autre vers une valeur commune.

Cela peut être le résultat d'un repositionnement d'un actionneur d'une fenêtre de taille normale sur une fenêtre plus petite dimension, pour laquelle il n'est plus possible de différencier un temps de montée d'un temps de descente ou autrement dit, d'identifier un sens de déplacement de l'élément mobile. Il n'est alors pas possible de savoir si l'actionneur a été remonté dans le sens précédent ou dans le sens inverse. L'unité électronique constate dans ce cas, lors de l'auto-ajustement, que les valeurs des temps de référence convergent vers une valeur commune. Lorsque la différence entre ces temps de référence n'est plus significative, soit suite à un nombre c' de cycles présentant une telle convergence, l'unité électronique décide de remettre à jour ses paramètres de fonctionnement et réitère la phase d'initialisation.

Dans cette demande, on entend par « cycle », l'ensemble des déplacements préférentiellement dans un même sens de l'élément mobile depuis une position de butée ou une position de départ située dans une zone d'accostage vers une autre position de butée ou vers un obstacle.

Le procédé selon l'invention permet d'obtenir une information de durée de déplacement entre fins de course suffisamment précise pour pouvoir gérer grâce à cette information une position intermédiaire entre les positions de fin de course de l'élément mobile. Pour ce faire, on utilise une donnée de position intermédiaire, par exemple un pourcentage, définissant la position intermédiaire par rapport à l'une ou l'autre des fins de course. Notamment, la durée pour atteindre, depuis l'une des fins de course, cette position intermédiaire peut être définie comme le produit du pourcentage et de l'information de durée de déplacement. Un exemple détaillé d'une telle gestion est par exemple décrit aux lignes 29 à 37 de la colonne 5 du document EP 0 574 637.

**EP 2 015 156 B1**

**Revendications**

1. Procédé de fonctionnement d'une installation domotique (1) comprenant un actionneur (2) pour manoeuvrer un élément mobile (3) de fermeture, d'occultation, de protection solaire ou d'écran entre une première position de fin de course et une deuxième position de fin de course, dans lequel on utilise une information (Tu, Td) proportionnelle à la durée de déplacement de l'élément mobile entre ces deux positions de fin de course, dite « information », **caractérisé en ce qu'**il comprend un mode d'ajustement automatique dans lequel l'information résulte d'un traitement numérique pondéré des différentes durées mesurées antérieurement lors de déplacements de l'élément mobile de l'une à l'autre des positions de fin de course.

2. Procédé de fonctionnement selon la revendication 1, **caractérisé en ce que** le traitement numérique pondéré comprend le calcul d'une moyenne arithmétique glissante portant sur un nombre de mesures précédentes prédéfini.

3. Procédé de fonctionnement selon la revendication 1, **caractérisé en ce que** le traitement numérique pondéré comprend l'établissement d'une nouvelle information à partir d'une somme algébrique pondérée portant au moins sur l'information précédente et sur la durée mesurée lors d'un nouveau déplacement de l'élément mobile de l'une à l'autre des positions de fin de course.

4. Procédé de fonctionnement selon la revendication 3, **caractérisé en ce que** la somme algébrique pondérée comprend un premier coefficient de pondération pour l'information précédente et un deuxième coefficient de pondération pour la durée mesurée, la somme des premier et deuxième coefficients de pondération étant unitaire.

5. Procédé de fonctionnement selon l'une des revendications précédentes, **caractérisé en ce que** l'information comprend une première donnée (Tu) relative aux déplacements de l'élément mobile de la première position de fin de course à la deuxième position de fin de course et une deuxième donnée (Td) relative aux déplacements de l'élément mobile de la deuxième position de fin de course à la première position de fin de course.

6. Procédé de fonctionnement selon l'une des revendications précédentes, **caractérisé en ce qu'**au moins une zone d'accostage est définie par une durée spécifique de déplacement depuis l'une et/ou l'autre des positions de fin de course, dite « durée spécifique », qui est déduite à partir de l'information.

7. Procédé de fonctionnement selon la revendication 6, **caractérisé en ce que** la sensibilité d'un capteur de détection d'arrivée en fin de course est augmentée dans la zone d'accostage.

8. Procédé de fonctionnement selon la revendication 6 ou 7, **caractérisé en ce que** la puissance de l'actionneur est réduite dans la zone d'accostage.

9. Procédé de fonctionnement selon l'une des revendications 6 à 8, **caractérisé en ce que** la durée spécifique est définie comme une fraction de l'information ou se déduit de l'information par soustraction d'une valeur fixe.

10. Procédé de fonctionnement selon l'une des revendications précédentes, **caractérisé en ce qu'**il comprend également un mode d'initialisation de l'information dans lequel l'information est soit remplacée par une valeur prédéterminée, soit remplacée par une première mesure de durée de déplacement de l'élément mobile de l'une à l'autre des positions de fin de course, le mode d'ajustement automatique faisant suite au mode d'initialisation une fois celui-ci terminé.

11. Procédé de fonctionnement selon la revendication 10, **caractérisé en ce qu'**on applique le mode d'initialisation lors d'une première installation, et/ou lorsque, au cours du mode d'ajustement automatique :

    - on détecte une absence de modification de l'information pendant un nombre prédéterminé de cycles donnant lieu à détection d'obstacles,
    - on détecte une divergence entre les valeurs consécutives de l'information pendant un nombre prédéterminé de cycles,
    - on détecte une convergence des valeurs consécutives de l'information, vers une valeur commune.

12. Procédé de fonctionnement selon la revendication 10 ou 11, **caractérisé en ce que** le mode d'initialisation comprend également une étape de reconnaissance du sens de déplacement de l'élément mobile par analyse de l'information et une affectation de valeurs différentes de sensibilité de détection pour chaque sens de déplacement.

**13.** Installation domotique (1) comprenant un actionneur (2) pour manoeuvrer un élément mobile (3) de fermeture, d'occultation, de protection solaire ou d'écran entre une première position de fin de course et une deuxième position de fin de course, **caractérisée en ce qu'**elle comprend des moyens matériels (5, 7, 8, 9, 10, 11) et logiciels de mise en oeuvre du procédé selon l'une des revendications précédentes.

**14.** Installation domotique selon la revendication 13, **caractérisée en ce qu'**elle comprend des moyens (9) de mesure de la durée des déplacements de l'élément mobile.

**15.** Installation domotique selon la revendication 13 ou 14, **caractérisée en ce qu'**elle comprend des moyens (8) de traitement numérique pondéré.

**Claims**

**1.** An operating method for a home automation installation (1) comprising an actuator (2) for maneuvering a movable closing, privacy, sun protection, or screen element (3) between a first end-of-travel position and a second end-of-travel position, in which information (Tu, Td) is used proportional to the movement duration of the movable element between said two end-of-travel positions, called "information," **characterized in that** it comprises an automatic adjustment mode in which the information results from digital processing weighted by the different durations measured beforehand when the movable element moves from one of said end-of-travel positions to the other.

**2.** The operating method according to claim 1, **characterized in that** the weighted digital processing comprises computing a sliding arithmetic average pertaining to a predefined number of preceding measurements.

**3.** The operating method according to claim 1, **characterized in that** the weighted digital processing comprises establishing new information from a weighted algebraic sum pertaining at least to the preceding information and the measured duration during a new movement of the movable element from one end-of-travel position to the other.

**4.** The operating method according to claim 3, **characterized in that** the weighted algebraic sum comprises a first weight coefficient for the preceding information and a second weight coefficient for the measured duration, the sum of the first and second weight coefficients being unitary.

**5.** The operating method according to one of the preceding claims, **characterized in that** the information comprises a first datum (Tu) relative to the movements of the movable element from the first end-of-travel position to the second end-of-travel position and a second datum (Td) relative to the movements of the movable element from the second end-of-travel position to the first end-of-travel position.

**6.** The operating method according to one of the preceding claims, **characterized in that** at least one approach zone is defined by a specific movement time from one and/or the other of the end-of-travel positions, called "specific duration," which is deduced from the information.

**7.** The operating method according to claim 6, **characterized in that** the sensitivity of an end-of-travel sensor is increased in the approach zone.

**8.** The operating method according to claim 6 or 7, **characterized in that** the power of the actuator is reduced in the approach zone.

**9.** The operating method according to one of claims 6 to 8, **characterized in that** the specific duration is defined as a fraction of the information or is deduced from the information by subtracting a fixed value.

**10.** The operating method according to one of the preceding claims, **characterized in that** it also comprises a mode for initializing the information in which the information is either replaced by a predetermined value, or replaced by a first movement duration measurement of the movable element from one end-of-travel position to the other, the automatic adjustment mode following the initialization mode once the latter is finished.

**11.** The operating mode according to claim 10, **characterized in that** the initialization mode is applied during a first installation, and/or when, during the automatic adjustment mode:

- an absence of modification of the information is detected during a predetermined number of cycles giving rise to the detection of obstacles,
- a divergence is detected between the consecutive values of the information for a predetermined number of cycles,
- a convergence of consecutive values of the information is detected, toward a shared value.

12. The operating method according to claim 10 or 11, **characterized in that** the initialization mode also comprises a step for recognizing the direction of movement of the movable element by analyzing the information and assigning different detection sensitivity values for each direction of movement.

13. A home automation installation (1) comprising an actuator (2) for maneuvering a movable closing, privacy, sun protection, or screen element (3) between a first end-of-travel position and a second end-of-travel position, **characterized in that** it comprises material means (5, 7, 8, 9, 10, 11) and software for implementing the method according to one of the preceding claims.

14. The home automation installation according to claim 13, **characterized in that** it comprises means (9) for measuring the movement durations of the movable element.

15. The home automation installation according to claim 13 or 14, **characterized in that** it comprises weighted digital processing means (8).

**Patentansprüche**

1. Verfahren zum Betrieb einer Domotik-Anlage (1), die einen Stellantrieb (2) umfasst, um ein bewegliches Schließer-, Verdunkelungs-, Sonnenschutz- oder Schirmelement (3) zwischen einer ersten Endlage und einer zweiten Endlage zu verstellen, wobei eine Information (Tu, Td) verwendet wird, die proportional zur Zeitdauer der Bewegung des beweglichen Elements zwischen diesen beiden Endlagen ist, als "Information" bezeichnet, **dadurch gekennzeichnet, dass** es einen Modus zur automatischen Einstellung umfasst, wobei die Information aus einer gewichteten numerischen Verarbeitung verschiedener Zeitdauern resultiert, die vorher bei Bewegungen des beweglichen Elements aus der einen in die andere Endlage gemessen wurden.

2. Betriebsverfahren nach Anspruch 1, **dadurch gekennzeichnet, dass** die gewichtete numerische Verarbeitung die Berechnung eines gleitenden arithmetischen Mittelwerts über eine vorgegebene Anzahl vorhergehender Messwerte umfasst.

3. Betriebsverfahren nach Anspruch 1, **dadurch gekennzeichnet, dass** die gewichtete numerische Verarbeitung das Erstellen einer neuen Information anhand einer gewichteten algebraischen Summe umfasst, die sich mindestens auf die vorhergehende Information und auf die Zeitdauer, die bei einer erneuten Bewegung des beweglichen Elements aus der einen in die andere Endlage gemessen wird, beläuft.

4. Betriebsverfahren nach Anspruch 3, **dadurch gekennzeichnet, dass** die gewichtete algebraische Summe einen ersten Gewichtungsfaktor für die vorhergehende Information und einen zweiten Gewichtungsfaktor für die gemessene Zeitdauer umfasst, wobei die Summe aus dem ersten und dem zweiten Gewichtungsfaktor eins ist.

5. Betriebsverfahren nach einem der vorhergehenden Ansprüche, **dadurch gekennzeichnet, dass** die Information eine erste Größe (Tu) umfasst, die sich auf die Bewegungen des beweglichen Elements aus der ersten Endlage in die zweite Endlage bezieht, und eine zweite Größe (Td), die sich auf die Bewegungen des beweglichen Elements aus der zweiten Endlage in die erste Endlage bezieht.

6. Betriebsverfahren nach einem der vorhergehenden Ansprüche, **dadurch gekennzeichnet, dass** mindestens eine Auflaufzone durch eine spezifische Zeitdauer der Bewegung von der einen und/oder der anderen der Endlagen aus bestimmt ist, "spezifische Zeitdauer" genannt, die aus der Information gefolgert wird.

7. Betriebsverfahren nach Anspruch 6, **dadurch gekennzeichnet, dass** die Empfindlichkeit eines Sensors zur Erfassung des Erreichens der Endlage in der Auflaufzone erhöht ist.

8. Betriebsverfahren nach Anspruch 6 oder 7, **dadurch gekennzeichnet, dass** die Leistung des Stellantriebs in der Auflaufzone reduziert wird.

9. Betriebsverfahren nach einem der Ansprüche 6 bis 8, **dadurch gekennzeichnet, dass** die spezifische Zeitdauer als ein Teil der Information definiert ist oder sich aus der Information durch Subtraktion eines Festwerts ableiten lässt.

10. Betriebsverfahren nach einem der vorhergehenden Ansprüche, **dadurch gekennzeichnet, dass** es außerdem einen Modus zur Initialisierung der Information umfasst, wobei die Information entweder durch einen vorgegebenen Wert ersetzt wird oder durch einen ersten Messwert für die Zeitdauer der Bewegung des beweglichen Elements aus der einen in die andere Endlage ersetzt wird, wobei der Modus zur automatischen Einstellung auf den Initialisierungsmodus folgt, sobald dieser abgeschlossen ist.

11. Betriebsverfahren nach Anspruch 10, **dadurch gekennzeichnet, dass** der Initialisierungsmodus bei einer Erstinstallation angewendet wird und/oder dann, wenn im Modus zur automatischen Anpassung

- während einer vorgegebenen Anzahl Zyklen keine Veränderung der Information festgestellt wird, was Hindernisse erkennen lässt,
- während einer vorgegebenen Anzahl Zyklen eine Divergenz bei aufeinander folgenden Werten der Information festgestellt wird,
- bei aufeinander folgenden Werten der Information eine Konvergenz zu einem gemeinsamen Wert festgestellt wird.

12. Betriebsverfahren nach Anspruch 10 oder 11, **dadurch gekennzeichnet, dass** der Initialisierungsmodus außerdem einen Schritt der Erkennung der Bewegungsrichtung des beweglichen Elements, durch Analyse der Information, und eine Zuordnung verschiedener Nachweisempfindlichkeitswerte zu jeder Bewegungsrichtung umfasst.

13. Domotik-Anlage (1), die einen Stellantrieb (2) umfasst, um ein bewegliches Schließer-, Verdunkelungs-, Sonnenschutz- oder Schirmelement (3) zwischen einer ersten Endlage und einer zweiten Endlage zu verstellen, **dadurch gekennzeichnet, dass** sie Hardware-(5, 7, 8, 9, 10, 11) und Softwaremittel zur Durchführung des Verfahrens nach einem der vorhergehenden Ansprüche umfasst.

14. Domotik-Anlage nach Anspruch 13, **dadurch gekennzeichnet, dass** sie Mittel (9) zum Messen der Zeitdauer der Bewegungen des beweglichen Elements umfasst.

15. Domotik-Anlage nach Anspruch 13 oder 14, **dadurch gekennzeichnet, dass** sie Mittel (8) zur gewichteten numerischen Verarbeitung umfasst.

## Fig.1

$Td \times Tu$

$Z_3$

$Z_2$

$X = t_1 \times Td$

$t_2$

$Y = t_1 \times Td - t_2 \times Tu$

$Td$

$Tu$

$t_1$

$Z_2$

$Z_1$

0

## Fig.2

100

Position courante = position de fin de course ?

130

110

Détermination des temps de parcours mesurés au cycle n $tu_n$, $td_n$

Mémorisation des temps de référence calculés pour le cycle n $Tu_n$, $Td_n$

Ajustement des valeurs des temps de référence $Tu_n$, $Td_n$

120

## Fig.3

Td

Obstacle
temporaire

Obstacle
permanent

k cycles

Position
obstacle

k cycles

temps

Détection
obstacle

99% à 5k cycles

8
7    9    4

1

3

5    2    11    10

## Fig.4

## RÉFÉRENCES CITÉES DANS LA DESCRIPTION

**Documents brevets cités dans la description**

- FR 2849553
- US 5729101 A
- EP 1122404 A
- EP 0574637 A
- EP 1508844 A
- EP 0833435 A